# EUROPEAN PATENT APPLICATION

(11) **EP 2 393 239 A1**
(43) Date of publication of application: **07.12.2011**
(21) Application number: 11168166.4
(22) Date of filing: 31.05.2011
(51) Int. Cl.: H04L 12/24, H04L 12/26, H04L 12/28

(54) **Network system**

(30) Priority: 01.06.2010 JP 2010125445
(71) Applicant: Funai Electric Co., Ltd., Daito-shi, Osaka 574-0013 (JP)
(72) Inventor: Kojina, Atsushi, Daito-shi, Osaka 574-0013 (JP)
(74) Representative: Grünecker, Kinkeldey, Stockmair & Schwanhäusser

(57) **Abstract**

This network system (1) includes a plurality of electronic apparatuses (10, 20) having a communication function capable of establishing a network (4) selectively employing a channel available on coaxial wiring (2) and is formed to reestablish the network if a management apparatus (20) managing the network determines that communication quality of the channel is deteriorated.

## Description

### BACKGROUND OF THE INVENTION

### Field of the Invention

The present invention relates to a network system, and more particularly, it relates to a network system comprising a plurality of electronic apparatuses having a communication function capable of establishing a network on coaxial wiring.

### Description of the Background Art

A network system comprising a plurality of electronic apparatuses having a communication function capable of establishing a network on coaxial wiring is known in general, as disclosed in Japanese Patent Laying-Open No. 2004-282148, for example.

The aforementioned Japanese Patent Laying-Open No. 2004-282148 discloses a network system comprising a plurality of communication apparatuses (electronic apparatuses) connected to coaxial wiring. In this network system, the communication apparatuses are formed to be capable of establishing a network by performing communication selectively employing a plurality of frequencies and bandwidths (a plurality of channels) in a prescribed frequency band (a frequency band not employed in television broadcasts or the like) on the coaxial wiring.

However, in the network system described in Japanese Patent Laying-Open No. 2004-282148, once the network is established, the plurality of communication apparatuses on the network conceivably continue to employ a frequency selected when the network is established without change of the frequency. Therefore, when a user subscribes a new service (satellite broadcast, for example) employing the coaxial wiring, for example, a frequency employed for the new service and the frequency employed for communication between the communication apparatuses compete against each other, whereby the communication quality may be deteriorated. When a communication environment in the coaxial wiring is changed as described above, the user must confirm whether or not the communication quality is deteriorated through manual operation in order to confirm whether or not the communication quality is deteriorated. If confirming that the communication quality is deteriorated, the user must change a channel employed for communication to another channel with excellent communication quality through manual operation.

Therefore, in the conventional network system employing the coaxial wiring, the operational load on the user in a case where the communication environment in the coaxial wiring is changed is disadvantageously increased.

### SUMMARY OF THE INVENTION

The present invention has been proposed in order to solve the aforementioned problems, and an object of the present invention is to provide a network system capable of reducing the operational load on a user in a case where a communication environment in a network employing coaxial wiring is changed.

A network system according to an aspect of the present invention comprises a plurality of electronic apparatuses having a communication function capable of establishing a network selectively employing one channel of a plurality of channels available on coaxial wiring, wherein the plurality of electronic apparatuses include a management apparatus managing the network, wherein the management apparatus is formed to determine whether or not communication quality of the one channel is deteriorated by evaluating the communication quality of the one channel employed by the plurality of electronic apparatuses periodically, and the network system is formed to reestablish the network if the management apparatus determines that the communication quality of the one channel is deteriorated.

In the network system according to the aspect of the present invention, as hereinabove described, the management apparatus is formed to determine whether or not the communication quality is deteriorated by evaluating the communication quality of the one channel employed by the plurality of electronic apparatuses periodically, whereby it is not necessary to repeatedly confirm whether or not the communication quality is deteriorated through manual operation, and hence the operational load on a user in confirming whether or not the communication quality is deteriorated can be reduced. Further, as hereinabove described, the network is reestablished if the management apparatus determines that the communication quality is deteriorated, whereby it is not necessary to change a channel employed for communication through manual operation every time deterioration of the communication quality is confirmed, and hence the operational load on the user can be reduced also in this respect. Consequently, the operational load on the user in a case where a communication environment in the network employing the coaxial wiring is changed can be reduced.

In the aforementioned network system according to the aspect, the management apparatus is preferably formed to evaluate communication quality of the plurality of channels available on the coaxial wiring and select a channel with the best communication quality from among the plurality of channels on the basis of evaluated values of the communication quality of the plurality of channels available on the coaxial wiring, and the network system is preferably formed to reestablish the network employing the channel with the best communication quality selected by the management apparatus. According to this structure, the network is automatically reestablished by employing the channel with the best communication quality selected from among the plurality of channels available on the coaxial wiring by the management apparatus, and hence the network can be maintained with the best communication quality with no operational load on the user.

In the aforementioned network system according to the aspect, the management apparatus is preferably formed to determine that the communication quality of the one channel is deteriorated when an evaluated value of the communication quality of the one channel falls below a prescribed first threshold, and the network system is preferably formed to reestablish the network if the management apparatus determines that the communication quality of the one channel is deteriorated. According to this structure, whether or not the communication quality of a channel currently employed is deteriorated can be reliably determined on the basis of the first threshold.

In this case, the first threshold is preferably decided on the basis of a past evaluated value of the communication quality of the one channel. According to this structure, the first threshold can be easily decided on the basis of the past evaluated value of the communication quality of the one channel.

In the aforementioned network system according to the aspect, the management apparatus is preferably formed to evaluate the communication quality of the channel after a prescribed time period has elapsed since the network was established, and a communication state is stabilized. The management apparatus cannot accurately evaluate the communication quality if evaluating the communication quality when the communication state is not stabilized immediately after the network is established, whereas in the present invention, the management apparatus can accurately evaluate the communication quality by evaluating the communication quality of the channel after the prescribed time period has elapsed since the network was established, and the communication state is stabilized.

In the aforementioned network system according to the aspect, the management apparatus is preferably formed to evaluate the communication quality of the channel on the basis of a communication speed in the channel. According to this structure, the communication quality can be easily evaluated, dissimilarly to a case where the communication quality is evaluated by measuring the packet loss and the delay time in transmitting and receiving a test packet, for example.

In this case, the management apparatus is preferably formed to evaluate the communication quality of the channel on the basis of a total value of a communication speed between the management apparatus and each of a plurality of electronic apparatuses other than the management apparatus in the channel. According to this structure, the communication quality can be adequately evaluated, dissimilarly to a case where the communication quality is evaluated on the basis of only the communication speed between the management apparatus and one of the plurality of electronic apparatuses other than the management apparatus.

In the aforementioned network system evaluating the communication quality of the channel on the basis of the communication speed, the communication speed is preferably a communication speed of a physical layer in an OSI reference model. According to this structure, the communication quality can be evaluated on the basis of a communication speed in a simpler communication protocol, dissimilarly to a case where the communication quality is evaluated on the basis of a communication speed in an application layer or the like higher than the physical layer, and hence the communication quality can be more easily evaluated.

In the aforementioned network system according to the aspect, the management apparatus is preferably formed to send information about a channel, an evaluated value of communication quality of which falls below a prescribed second threshold, of the plurality of channels to an electronic apparatus connected to the coaxial wiring other than the management apparatus. According to this structure, the management apparatus can send the information about the channel, the evaluated value of the communication quality of which falls below the second threshold to the electronic apparatus connected to the coaxial wiring and not joining the network. Consequently, use of the channel, the evaluated value of the communication quality of which falls below the second threshold, can be inhibited when a new network is established by the electronic apparatus connected to the coaxial wiring and not joining the network, and hence establishment of a network with poor communication quality on the coaxial wiring can be inhibited.

In this case, the management apparatus is preferably formed to send the information about the channel, the evaluated value of the communication quality of which falls below the prescribed second threshold to the electronic apparatus connected to the coaxial wiring other than the management apparatus by including taboo information with the information about the channel, the evaluated value of the communication quality of which falls below the prescribed second threshold in a synchronization signal transmitted when synchronizing communication with the electronic apparatus other than the management apparatus. According to this structure, the information about the channel, the evaluated value of the communication quality of which falls below the second threshold can be easily sent to all the electronic apparatuses connected to the coaxial wiring with the taboo information included in the synchronization signal transmitted when synchronizing communication with the electronic apparatus other than the management apparatus.

In the aforementioned network system sending the information about the channel, the evaluated value of the communication quality of which falls below the second threshold by including the taboo information in the synchronization signal, the management apparatus is preferably formed to determine whether or not communication quality of a channel included in the taboo information has been recovered by evaluating the communication quality of the channel included in the taboo information periodically and delete the channel, the communication quality of which has been recovered, from the taboo information if determining that the communication quality of the channel included in the taboo information has been recovered. According to this structure, the channel, the communication quality of which has been recovered, included in the taboo information is deleted from the taboo information, whereby even the channel included in the taboo information can be employed as a channel for establishing the network if the communication quality thereof has been recovered, and hence all the plurality of channels available on the coaxial wiring can be employed.

In this case, a time interval for evaluating the communication quality of the channel included in the taboo information periodically is preferably longer than a time interval for evaluating the communication quality of the one channel employed by the plurality of electronic apparatuses periodically. According to this structure, the frequency of evaluating the communication quality of the channel included in the taboo information can be decreased, dissimilarly to a case where the time interval for evaluating the communication quality of the channel included in the taboo information periodically is shorter than the time interval for evaluating the communication quality of the one channel employed by the plurality of electronic apparatuses periodically. Consequently, the burden on the electronic apparatuses in evaluating the communication quality of the channel included in the taboo information can be reduced.

In the aforementioned network system according to the aspect, each of the plurality of electronic apparatuses is preferably formed to be capable of functioning as the management apparatus, and the network system is preferably so formed that another electronic apparatus other than an electronic apparatus selected as the management apparatus is not selected as the management apparatus at least during a time period when the network is reestablished, when an electronic apparatus with the best communication quality is selected from among the plurality of electronic apparatuses as the management apparatus. According to this structure, the another electronic apparatus other than the electronic apparatus selected as the management apparatus can be precluded from selection as the management apparatus at least during a time period when the network is reestablished. Consequently, disturbance of reestablishment of the network caused by dynamic switch of the management apparatus during a time period when the network is reestablished can be inhibited.

In this case, the network system according to the first aspect is preferably set such that the electronic apparatus selected as the management apparatus is preferentially selected as a management apparatus and the another electronic apparatus other than the electronic apparatus selected as the management apparatus is not preferentially selected as a management apparatus, so that the another electronic apparatus other than the electronic apparatus selected as the management apparatus is not selected as the management apparatus at least during a time period when the network is reestablished. According to this structure, the another electronic apparatus other than the electronic apparatus selected as the management apparatus before the network is reestablished can be set not to be preferentially selected as the management apparatus, and hence the management apparatus can be easily inhibited from switching dynamically during a time period when the network is reestablished.

In the aforementioned network system according to the aspect, each of the plurality of electronic apparatuses preferably has a receiving portion capable of receiving a broadcast signal through the coaxial wiring and has a communication function capable of establishing a network complying with a MoCA standard on the coaxial wiring. According to this structure, the operational load on the user in a case where a communication environment in the network complying with the MoCA standard, established on the coaxial wiring is changed can be reduced.

The foregoing and other objects, features, aspects and advantages of the present invention will become more apparent from the following detailed description of the present invention when taken in conjunction with the accompanying drawings.

### BRIEF DESCRIPTION OF THE DRAWING

Fig. 1 is an image diagram showing the structure of a network system according to an embodiment of the present invention;
Fig. 2 is an image diagram showing an arrangement of channels available on in-home coaxial wiring in the network system according to the embodiment of the present invention;
Fig. 3 is a block diagram showing the structure of an electronic apparatus (management apparatus) according to the embodiment of the present invention;
Fig. 4 is a flowchart for illustrating the control operation of a CPU of the electronic apparatus on a network according to the embodiment of the present invention;
Fig. 5 is a flowchart for illustrating in detail processing for reestablishing the network performed in the flowchart shown in Fig. 4;
Fig. 6 is a flowchart for illustrating in detail processing for changing a channel performed in the flowchart shown in Fig. 5; and
Fig. 7 is a flowchart for illustrating in detail processing for sending information about a channel with poor communication quality performed in the flowchart shown in Fig. 4.

### DESCRIPTION OF THE PREFERRED EMBODIMENTS

An embodiment of the present invention is now described with reference to the drawings.

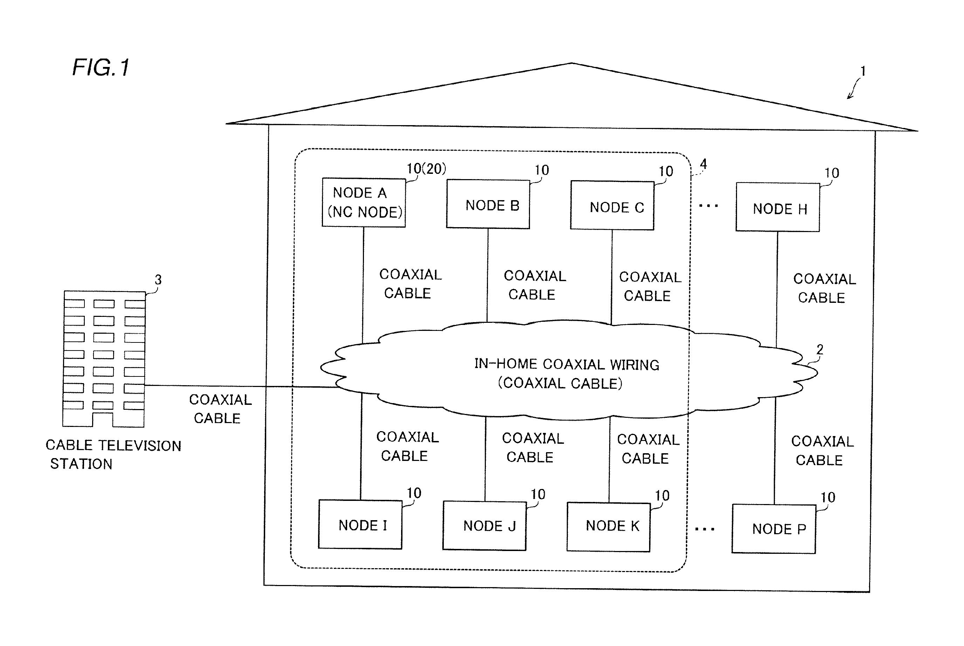

First, the structure of a network system 1 according to an embodiment of the present invention is described with reference to Fig. 1.

The network system 1 according to the embodiment of the present invention is constituted by in-home coaxial wiring 2 and sixteen electronic apparatuses 10, as shown in Fig. 1. The in-home coaxial wiring 2 is constituted by coaxial cables having a characteristic impedance of 75 Ω, for example. The in-home coaxial wiring 2 is connected to a cable television station 3 and formed to transmit a cable television signal distributed by the cable television station 3. The in-home coaxial wiring 2 is connected to an antenna (not shown) and formed to transmit a television broadcast signal received by the antenna.

The sixteen electronic apparatuses 10 are connected to the in-home coaxial wiring 2 through the coaxial cables. The electronic apparatuses 10 are settop boxes or television sets, for example. The electronic apparatuses 10 have a communication function capable of establishing a network on the in-home coaxial wiring 2. A MoCA (Multimedia over Coax Alliance) standard is known as a communication standard of a network employing coaxial wiring. According to this embodiment, a network 4 complying with the MoCA standard is established by six electronic apparatuses 10 (electronic apparatuses corresponding to nodes A, B, C, I, J, and K). A node denotes a communication terminal, which is a structural unit of a network. In the following description, it is assumed that the electronic apparatus 10 corresponding to the node A functions as a management apparatus 20 managing the network 4 as an NC node described later. Ten electronic apparatuses 10 corresponding to nodes D, E, F, G, H, L, M, N, O and P are connected to the in-home coaxial wiring 2 but not join the network 4.

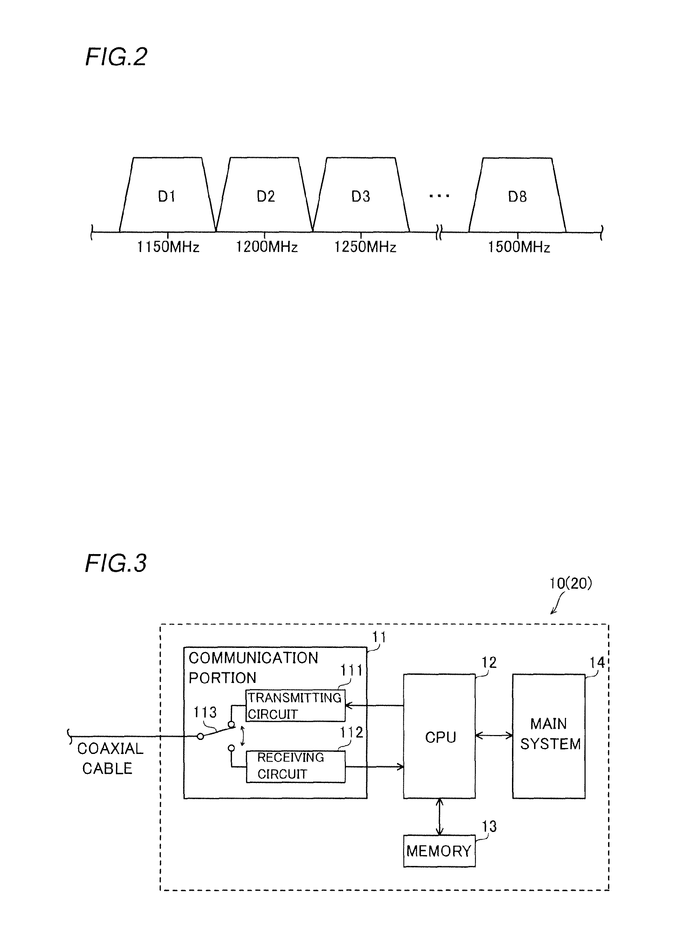

Next, the MoCA standard is schematically described with reference to Fig. 2.

In the MeCA standard, fourteen channels (channels A1, B1, C1, C2, C3, C4, D1, D2, D3, D4, D5, D6, D7 and D8) each having a bandwidth of 50 MHz in a frequency band between 850 MHz and 1525 MHz are defined as channels employed for communication on coaxial wiring. The channels D1 to D8 are arranged in a frequency band between 1125 MHz and 1525 MHz, as shown in Fig. 2. The channel A1, the channel B1 and the channels C1 to C4 are arranged in a frequency band smaller than that of the channels D1 to D8 (a frequency band of not more than about 1000 MHz). The frequency band in which the channel A1, the channel B1 and the channels C1 to C4 are arranged is a frequency band (a frequency band of not more than about 1000 MHz) employed for transmission of a cable television signal and a television signal on coaxial wiring.

In the MoCA standard, a single network is established by a maximum of sixteen nodes. Further, in the MoCA standard, one node is selected from among a plurality of nodes included in the single network as an NC (Network Coordinator) node. The NC node denotes a node having a function of managing a network. For example, the NC node has a function of transmitting a beacon signal for synchronizing communication with other nodes on coaxial wiring and allowing a node outside the network to join the network. The beacon signal is an example of the "synchronization signal" in the present invention. Further, in the MoCA standard, a node with the best communication quality among the plurality of nodes included in the network is automatically selected as the NC node. In other words, in the MoCA standard, all nodes included in the network can function as the NC node, and the NC node dynamically switches.

Next, the structure of the electronic apparatus 10 (management apparatus 20) according to the embodiment of the present invention is described with reference to Fig. 3.

The electronic apparatus 10 (management apparatus 20) according to the embodiment of the present invention is constituted by a communication portion 11, a CPU 12, a memory 13 and a main system 14, as shown in Fig. 3. The communication portion 11 is connected to the in-home coaxial wiring 2 through the coaxial cable. The communication portion 11 has a function of performing communication complying with the MoCA standard. The electronic apparatus 10 (management apparatus 20) is formed to establish a network selectively employing one of eight channels (channels D1 to D8 (see Fig. 2)) available on the in-home coaxial wiring 2 through this communication portion 11.

The communication portion 11 includes a transmitting circuit 111, a receiving circuit 112 and a switch 113. The transmitting circuit 111 is a circuit for transmitting a signal to another electronic apparatus 10 (management apparatus 20) on the network. The receiving circuit 112 is a circuit for receiving a broadcast signal such as a cable television signal and a television broadcast signal and a signal transmitted by another electronic apparatus 10 (management apparatus 20) on the network. The switch 113 is formed to switch between a connection between the coaxial cable and the transmitting circuit 111 and a connection between the coaxial cable and the receiving circuit 112 in a time-divided manner. The receiving circuit 112 is an example of the "receiving portion" in the present invention.

The CPU 12 has a function of controlling operations of the overall electronic apparatus 10 (management apparatus 20). The memory 13 has a function of storing information or the like acquired from another electronic apparatus 10 (management apparatus 20) through the coaxial cable. The main system 14 is a system for fulfilling major functions that the electronic apparatus 10 has. For example, the main system 14 is a signal conversion system for making the electronic apparatus 10 (management apparatus 20) serve as a settop box. Also, for example, the main system 14 is an image display system for making the electronic apparatus 10 (management apparatus 20) serve as a television set.

According to this embodiment, the management apparatus 20 (the electronic apparatus 10 corresponding to the node A (see Fig. 1)) is formed to determine whether or not the communication quality of a channel is deteriorated by evaluating the communication quality of one channel (one channel of the channels D1 to D8 (see Fig. 2)) employed by the six electronic apparatuses 10 (the electronic apparatuses 10 corresponding to the nodes A to C and I to K (see Fig. 1)) on the network 4 periodically (every 60 minutes, for example). Specifically, the management apparatus 20 is formed to determine that the communication quality is deteriorated when an evaluated value of the communication quality falls below a prescribed first threshold (a value decided on the basis of a past evaluated value). This first threshold is set to 80 % of an evaluated value 60 minutes before. According to this embodiment, the network 4 is reestablished if the management apparatus 20 determines that the communication quality is deteriorated.

The management apparatus 20 is formed to evaluate the communication quality of a channel on the basis of the communication speed in the channel. In the MoCA standard, a value of "OFDMb/GAP" is set as an index for evaluating the communication quality. The communication speed between nodes on the network (the communication speed of the physical layer in the OSI reference model) is obtained from this OFDMb/GAP.

The management apparatus 20 is formed to evaluate the communication quality on the basis of the total value of the communication speed between the management apparatus 20 and each of the five electronic apparatuses 10 (the electronic apparatuses 10 corresponding to the nodes B, C and I to K (see Fig. 1)) other than the management apparatus 20. Specifically, the management apparatus 20 acquires a value of OFDMb/GAP from each of the five electronic apparatuses 10 other than the management apparatus 20 on the network 4 when evaluating the communication quality. Then, the management apparatus 20 calculates the total value of acquired five values of OFDMb/GAP and evaluates the communication quality on the basis of the calculated total value.

The management apparatus 20 is formed to evaluate the communication quality of eight channels (channels D1 to D8 (see Fig. 2)) available for communication and select a channel with the best communication quality from among the eight channels on the basis of evaluated values of the communication quality of the eight channels. The network 4 is reestablished by employing the channel with the best communication quality selected by the management apparatus 20. The management apparatus 20 is formed to evaluate the communication quality after a prescribed time period (10 minutes, for example) has elapsed since the network 4 was established, and the communication state is stabilized.

The management apparatus 20 is formed to send information about a channel, an evaluated value of the communication quality of which falls below a prescribed second threshold (50 % of an evaluated value of the communication quality of a channel with the best communication quality, for example), among the eight channels available for communication to the electronic apparatuses 10 (the electronic apparatuses 10 corresponding to the nodes B to P (see Fig. 1)) other than the management apparatus 20 connected to the in-home coaxial wiring 2. In the MoCA standard, there is means of including the information about the channel to be provided in the aforementioned beacon signal as means of providing the information about the channel to nodes other than the NC node by the NC node. In other words, in the MoCA standard, information of a taboo list can be included in the beacon signal. In the MoCA standard, a node receiving the beacon signal including the taboo list prevents use of a channel in the taboo list in establishment of the network. The taboo list is an example of the "taboo information" in the present invention.

The management apparatus 20 is formed to determine whether or not the communication quality of the channel included in the taboo list has been recovered by evaluating the communication quality of the channel included in the taboo list periodically (every other day, for example), and delete the channel, the communication quality of which has been recovered, from the taboo list if determining that the communication quality of the channel included in the taboo list has been recovered. According to this embodiment, a time interval (one day) for evaluating the communication quality of the channel included in the taboo list periodically is set to be longer than a time interval (60 minutes) for evaluating the communication quality of one channel currently employed in the network 4 periodically.

According to this embodiment, each of the six electronic apparatuses 10 (the electronic apparatuses 10 corresponding to the nodes A to C and I to K (see Fig. 1)) on the network 4 is formed to be capable of functioning as the management apparatus 20 managing the network 4. Further, according to this embodiment, another electronic apparatus 10 other than the electronic apparatus 10 selected as the management apparatus 20 is not selected as the management apparatus 20 at least during a time period when the network 4 is reestablished, when the electronic apparatus 10 with the best communication quality is selected from among the six electronic apparatuses 10 on the network 4 as the management apparatus 20. For example, according to this embodiment, the electronic apparatus 10 corresponding to the node A is selected as the management apparatus 20, as shown in Fig. 1, and hence the electronic apparatuses 10 (the electronic apparatuses 10 corresponding to the nodes B, C and I to K (see Fig. 1)) other than the electronic apparatus 10 corresponding to the node A are not selected as the management apparatus 20 at least during a time period when the network 4 is reestablished.

According to this embodiment, the electronic apparatus 10 (the electronic apparatus 10 corresponding to the node A (see Fig. 1)) selected as the management apparatus 20 is set to be preferentially selected as the management apparatus 20, and the electronic apparatuses 10 (the electronic apparatuses 10 corresponding to the nodes B, C and I to K (see Fig. 1)) other than the electronic apparatus 10 selected as the management apparatus 20 are set not to be preferentially selected as the management apparatus 20. In the MoCA standard, "Preferred NC" is set in order to preferentially select a prescribed node as the NC node.

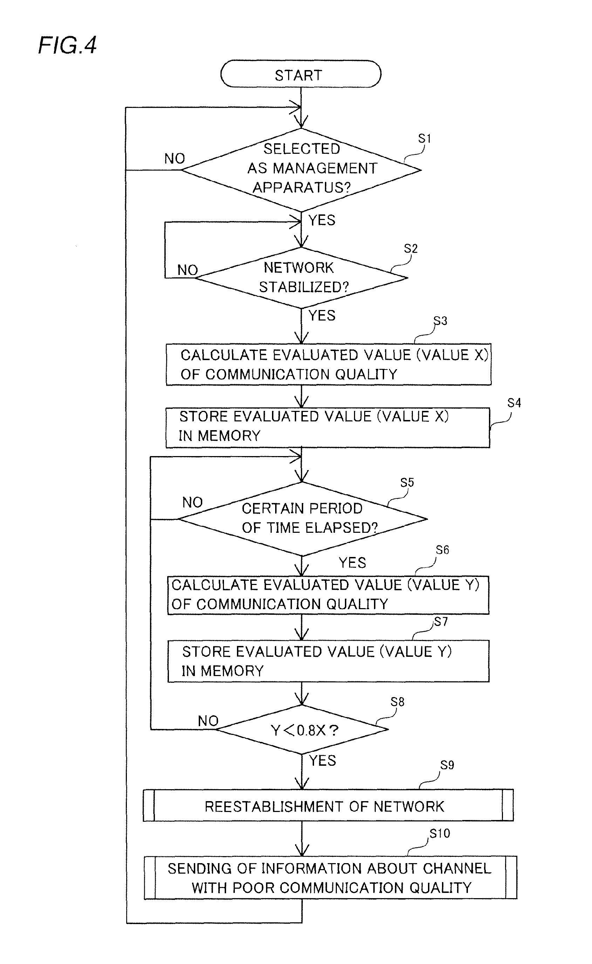

Next, the control operation of the CPU 12 of each of the electronic apparatuses 10 (the electronic apparatuses 10 corresponding to the nodes A to C and I to K (see Fig. 1)) on the network 4 according to this embodiment is described with reference to Figs. 4 to 7.

As shown in Fig. 4, the CPU 12 first determines whether or not its electronic apparatus 10 is selected as the management apparatus 20 at a step S1 At the step S1, this determination is repeated until its electronic apparatus 10 is selected as the management apparatus 20, and the CPU 12 advances to a step S2 if determining that its electronic apparatus 10 is selected as the management apparatus 20. In the network 4 according to this embodiment, the electronic apparatus 10 corresponding to the node A is selected as the management apparatus 20, as shown in Fig, 1, and hence the electronic apparatus 10 corresponding to the node A performs processing after the step S2 unless the management apparatus 20 switches.

Next, the CPU 12 determines whether or not the network 4 is stabilized at the step S2. Specifically, the CPU 12 determines whether or not a prescribed time period (10 minutes, for example) has elapsed since the network 4 was established and the communication state is stabilized. At the step S2, this determination is repeated until the network 4 is stabilized, and the CPU 12 advances to a step S3 if determining that the network 4 is stabilized.

Then, an evaluated value of the communication quality of a channel (one of the channels D1 to D8 (see Fig. 2)) employed for communication in the network 4 is calculated at the step S3. Specifically, the management apparatus 20 (the electronic apparatus 10 corresponding to the node A (see Fig. 1)) acquires a value of OFDMb/GAP from each of the five electronic apparatuses 10 (the electronic apparatuses 10 corresponding to the nodes B, C and I to K (see Fig. 1)) other than the management apparatus 20 on the network 4 and calculates the total value. Then, the CPU 12 advances to a step S4. In the following, a value X represents the evaluated value calculated at this step S3.

At the step S4, the evaluated value (value X) calculated at the step S3 is stored in the memory 13, and the CPU 12 advances to a step S5. At the step S5, the CPU 12 determines whether or not a certain period of time has elapsed. The CPU 12 determines whether or not 60 minutes has elapsed since the value X was stored in the memory 13 at the step S4, for example. At the step S5, this determination is repeated until a certain period of time (60 minutes, for example) has elapsed, and the CPU 12 advances to a step S6 if determining that a certain period of time (60 minutes, for example) has elapsed.

At the step S6, the evaluated value of the communication quality of the channel (the same channel as the channel, the evaluated value of which is calculated at the step S3) employed for communication in the network 4 is recalculated. Specifically, the management apparatus 20 acquires a value of OFDMb/GAP from each of the five electronic apparatuses 10 other than the management apparatus 20 on the network 4 and calculates the total value, similarly to the aforementioned step S3. Then, the CPU 12 advances to a step S7. In the following, a value Y represents the evaluated value calculated at this step S6. At the step S7, the value Y calculated at the step S6 is stored in the memory 13, and the CPU 12 advances to a step S8.

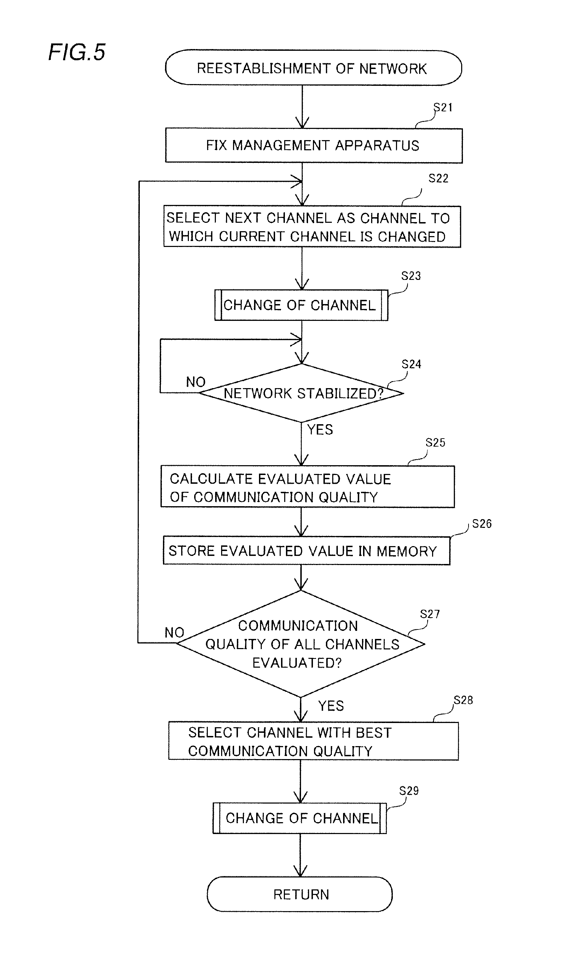

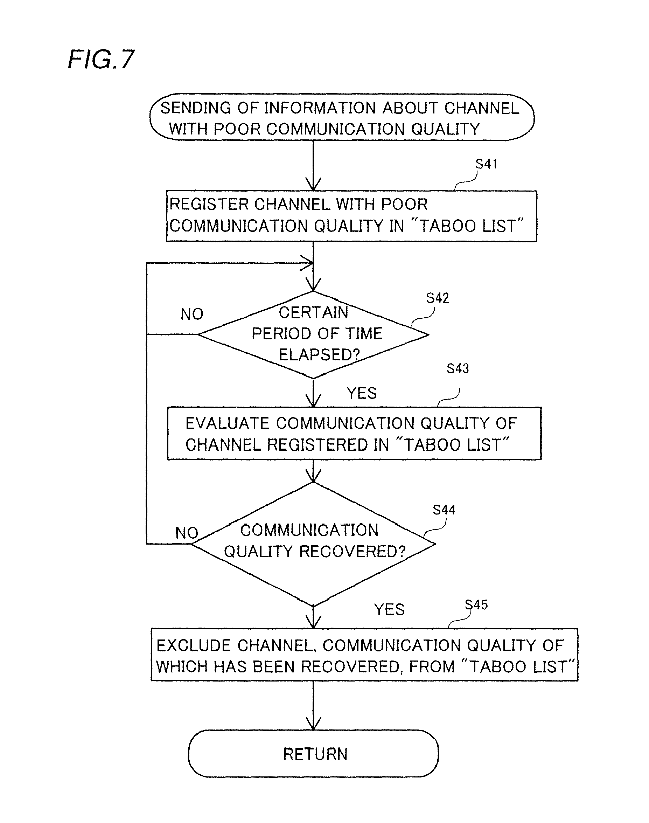

At the step S8, the CPU 12 determines whether or not the value Y falls below 80 % of the value X. If determining that the value Y is at least 80 % of the value X at the step S8, the CPU 12 returns to the step S5. If determining that the value Y falls below 80 % of the value X at the step S8, the CPU 12 advances to a step S9. At the step S9, processing (see Fig. 5) for reestablishing the network 4 described later is performed, and the CPU 12 advances to a step S10. At the step S10, processing (see Fig. 7) for sending information about a channel with poor communication quality described later is performed, and the CPU 12 returns to the step S1.

Next, the aforementioned processing for reestablishing the network 4 performed at the step S9 shown in Fig. 4 is described in detail with reference to Fig. 5.

As shown in Fig. 5, the CPU 12 first fixes the management apparatus 20 at a step S21. Specifically, the management apparatus 20 (the electronic apparatus 10 corresponding to the node A (see Fig. 1)) in the network 4 is set as "Preferred NC" while the electronic apparatuses 10 (the electronic apparatuses 10 corresponding to the nodes B, C and I to K (see Fig. 1)) other than the management apparatus 20 are not set as "Preferred NC", whereby the management apparatus 20 does not switch. Then, the CPU 12 advances to a step S22.

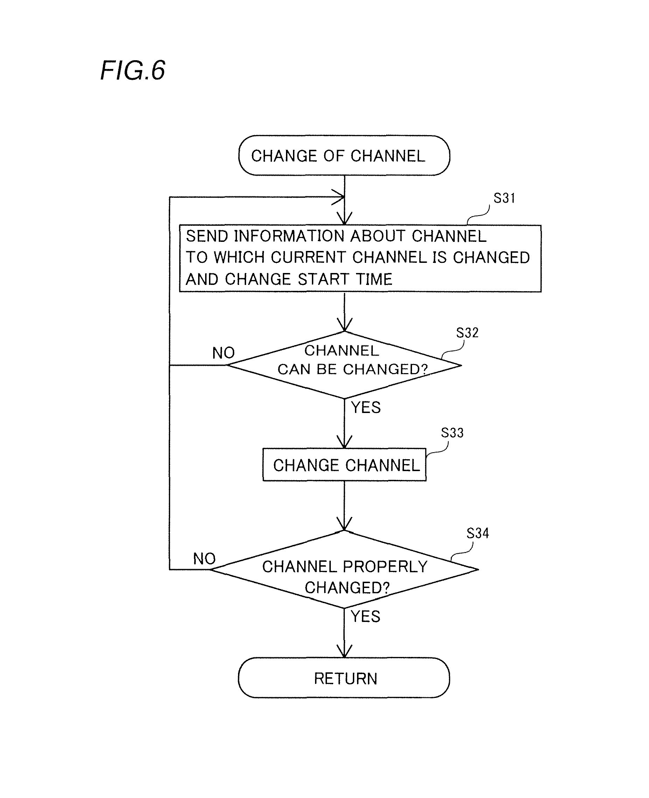

Next, at the step S22, the CPU 12 selects a next channel as a channel to which a current channel is changed. When the six electronic apparatuses 10 (the electronic apparatuses 10 corresponding to the nodes A to C and I to K (see Fig. 1)) included in the network 4 perform communication employing the channel D1, for example, the next channel is the channel D2 (see Fig. 2). Then, the CPU 12 advances to a step S23. At the step S23, processing (see Fig. 6) for changing a channel described later is performed, and the CPU 12 advances to a step S24.

At the step S24, the CPU 12 determines whether or not the network 4 is stabilized after the processing (see Fig. 6) for changing a channel at the step S23 is performed. Specifically, the CPU 12 determines whether or not a prescribed time period (10 minutes, for example) has elapsed since the processing (see Fig. 6) for changing a channel at the step S23 was performed and the communication state is stabilized, similarly to the aforementioned step S2 shown in Fig. 4. Then, the CPU 12 advances to a step S25.

At the step S25, an evaluated value of the communication quality of a channel (one of the channels D1 to D8 (see Fig. 2)) employed in the network 4 after the processing (see Fig. 6) for changing a channel at the step S23 is performed is calculated. Specifically, the management apparatus 20 acquires a value of OFDMb/GAP from each of the five electronic apparatuses 10 other than the management apparatus 20 on the network 4 and calculates the total value, similarly to the aforementioned steps S3 and S6 shown in Fig. 4. Then, the CPU 12 advances to a step S26. At the step S26, the evaluated value calculated at the step S25 is stored in the memory 13, and the CPU 12 advances to a step S27.

At the step S27, the CPU 12 determines whether or not the communication quality of all available channels (channels D1 to D8 (see Fig. 2)) has been evaluated. Specifically, the CPU 12 determines whether or not the evaluated values of all the channels D1 to D8 (see Fig. 2) have been calculated by repeating the aforementioned steps S22 to S26 eight times. If determining that the communication quality of all the available channels has not been evaluated at the step S27, the CPU 12 returns to the step S22. If determining that the communication quality of all the available channels has been evaluated at the step S27, the CPU 12 advances to a step S28.

At the step S28, the CPU 12 selects a channel with the best communication quality from among all the available channels as a channel to which a current channel is changed. Specifically, the evaluated values of all the channels D1 to D8 (see Fig. 2) calculated at the aforementioned step S25 and stored in the memory 13 at the aforementioned step S26 are compared with each other, whereby the channel with the best communication quality is selected from among the channels D1 to D8 (see Fig. 2). Then, the CPU 12 advances to a step S29. At the step S29, the processing (see Fig. 6) for changing a channel described later is performed, and the processing for reestablishing the network 4 is terminated.

Next, the aforementioned processing for changing a channel performed at the steps S23 and S29 shown in Fig. 5 is described in detail with reference to Fig. 6.

First, at a step S31, the management apparatus 20 (the electronic apparatus 10 corresponding to the node A (see Fig. 1)) sends information about a channel to which a current channel is changed and information about a change start time to the electronic apparatuses 10 (the electronic apparatuses 10 corresponding to the nodes B, C, and I to K (see Fig. 1)) other than the management apparatus 20 on the network 4. Specifically, a signal including the information about a channel to which a current channel is changed and the information about a change start time is transmitted from the management apparatus 20 to the electronic apparatuses 10 other than the management apparatus 20 on the network 4. Then, the CPU 12 advances to a step S32.

At the step S32, the CPU 12 determines whether or not a channel can be changed. Specifically, the CPU 12 determines whether or not the electronic apparatuses 10 other than the management apparatus 20 on the network 4 have sent a response that a change of the channel is accepted with respect to the signal transmitted by the management apparatus 20 at the step S31. If determining that the channel cannot be changed at the step S32, the CPU 12 returns to the step S31. If determining that the channel can be changed at the step S32, the CPU 12 advances to a step S33.

At the step S33, the channel is changed. Specifically, the management apparatus 20 instructs each of the electronic apparatuses 10 other than the management apparatus 20 on the network 4 to change the channel while changing its channel, whereby the channel of the overall network 4 c is changed. Then, the CPU 12 advances to a step S34.

At the step S34, the CPU 12 determines whether or not the channel has been properly changed. Specifically, the CPU 12 determines whether or not each of the electronic apparatuses 10 other than the management apparatus 20 on the network 4 after changing the channel has sent a response that the channel has been properly changed to the management apparatus 20. If determining that the channel has not been properly changed at the step S34, the CPU 12 returns to the step S31. If determining that the channel has been properly changed at the step S34, the processing is terminated.

Next, the aforementioned processing for sending information about the channel with poor communication quality performed at the step S10 shown in Fig. 4 is described in detail with reference to Fig. 7.

First, at a step S41, the management apparatus 20 (the electronic apparatus 10 corresponding to the node A (see Fig. 1)) registers a channel with poor communication quality in the aforementioned taboo list, as shown in Fig. 7. The management apparatus 20 transmits the beacon signal including this taboo list, whereby information about the channel with poor communication quality is sent to all the electronic apparatuses 10 (the electronic apparatuses 10 corresponding to the nodes B to P (see Fig. 1)) connected to the in-home coaxial wiring 2. The channel with poor communication quality is a channel having an evaluated value falling below 50 % of the evaluated value of the channel with the best communication quality among all the available channels (channels D1 to D8 (see Fig. 2)), for example. Then, the CPU 12 advances to a step S42.

At the step S42, the CPU 12 determines whether or not a certain period of time (one day, for example) has elapsed. Specifically, the CPU 12 determines whether or not one day has elapsed since the channel with poor communication quality was registered in the taboo list at the step S41. At the step S42, this determination is repeated until a certain period of time (one day) has elapsed since the channel with poor communication quality was registered in the taboo list at the step S41, and the CPU 12 advances to a step S43 if determining that a certain period of time (one day) has elapsed.

At the step S43, the communication quality of the channel registered in the taboo list at the step S41 is evaluated. Specifically, an evaluated value of the communication quality of the channel registered in the taboo list is calculated by employing a value of OFDMb/GAP, similarly to the aforementioned steps S3 and S4 shown in Fig. 4 and the aforementioned step S25 shown in Fig. 5. Then, the CPU 12 advances to a step S44.

At the step S44, the CPU 12 determines whether or not the communication quality of the channel registered in the taboo list has been recovered. When the evaluated value calculated at the step S43 is at least 50 % of the evaluated value of the channel with the best communication quality among all the available channels (channels D1 to D8 (see Fig. 2)), for example, the CPU 12 determines that the communication quality has been recovered. If determining that the communication quality of the channel registered in the taboo list has not been recovered at the step S44, the CPU 12 returns to the step S42. If determining that the communication quality of the channel registered in the taboo list has been recovered at the step S44, the CPU 12 advances to a step S45. At the step S45, the channel, the communication quality of which has been recovered is excluded from the taboo list, and the processing is terminated.

According to this embodiment, as hereinabove described, the management apparatus 20 (the electronic apparatus 10 corresponding to the node A (see Fig. 1)) is formed to determine whether or not the communication quality is deteriorated by evaluating the communication quality of one channel (one of the channels D1 to D8 (see Fig. 2)) employed by the six electronic apparatuses 10 (the electronic apparatuses 10 corresponding to the nodes A to C and I to K (see Fig. 1)) on the network 4 periodically (every 60 minutes, for example). Thus, it is not necessary to repeatedly confirm whether or not the communication quality is deteriorated through manual operation, and hence the operational load on the user in confirming whether or not the communication quality is deteriorated can be reduced. Further, according to this embodiment, as hereinabove described, the network 4 is reestablished if the management apparatus 20 determines that the communication quality is deteriorated, whereby it is not necessary to change a channel employed for communication through manual operation every time deterioration of the communication quality is confirmed, and hence the operation load on the user can be reduced also in this respect. Consequently, the operational load on the user in a case where a communication environment in the network employing the coaxial wiring is changed can be reduced.

According to this embodiment, as hereinabove described, the management apparatus 20 is formed to evaluate the communication quality of the eight available channels (channels D1 to D8 (see Fig. 2)) and select the channel with the best communication quality from among the eight channels on the basis of the evaluated values of the communication quality of the eight available channels. Further, the network 4 is reestablished by employing the channel with the best communication quality selected by the management apparatus 20. Thus, the network 4 is automatically reestablished by employing the channel with the best communication quality selected from among the eight available channels by the management apparatus 20, and hence the network 4 can be maintained with the best communication quality with no operational load on the user.

According to this embodiment, as hereinabove described, the management apparatus 20 is formed to determine that the communication quality of one channel is deteriorated when an evaluated value of the communication quality of one channel falls below the prescribed first threshold (80 % of an evaluated value 60 minutes before, for example). The network 4 is reestablished if the management apparatus 20 determines that the communication quality of one channel is deteriorated. Thus, whether or not the communication quality of a channel currently employed is deteriorated can be reliably determined on the basis of the first threshold.

According to this embodiment, as hereinabove described, the first threshold is decided on the basis of a past evaluated value of the communication quality of one channel. Thus, the first threshold can be easily decided on the basis of the past evaluated value of the communication quality of one channel.

According to this embodiment, as hereinabove described, the management apparatus 20 is formed to evaluate the communication quality of a channel after the prescribed time period (10 minutes, for example) has elapsed since the network 4 was established, and the communication state is stabilized. The management apparatus 20 cannot accurately evaluate the communication quality if evaluating the communication quality when the communication state is not stabilized immediately after the network 4 is established, whereas in the present invention, the management apparatus 20 can accurately evaluate the communication quality by evaluating the communication quality of the channel after the prescribed time period has elapsed since the network 4 was established, and the communication state is stabilized.

According to this embodiment, as hereinabove described, the management apparatus 20 is formed to evaluate the communication quality of a channel on the basis of the communication speed in the channel. Thus, the communication quality can be easily evaluated, dissimilarly to a case where the communication quality is evaluated by measuring the packet loss and the delay time in transmitting and receiving a test packet, for example.

According to this embodiment, as hereinabove described, the management apparatus 20 is formed to evaluate the communication quality of a channel on the basis of the total value of the communication speed in the channel between the management apparatus 20 and each of the five electronic apparatuses 10 (the electronic apparatuses 10 corresponding to the nodes B, C and I to K (see Fig. 1)) other than the management apparatus 20. Thus, the communication quality can be adequately evaluated, dissimilarly to a case where the communication quality is evaluated on the basis of only the communication speed between the management apparatus 20 and one of the five electronic apparatuses 10 other than the management apparatus 20.

According to this embodiment, the communication speed on which the evaluation of the communication quality of the channel is based is the communication speed of the physical layer in the OSI reference model. Thus, the communication quality can be evaluated on the basis of a communication speed in a simpler communication protocol, dissimilarly to a case where the communication quality is evaluated on the basis of a communication speed in the application layer or the like higher than the physical layer, and hence the communication quality can be more easily evaluated.

According to this embodiment, as hereinabove described, the management apparatus 20 is formed to send the information about a channel, the evaluated value of the communication quality of which falls below the prescribed second threshold (50 % of the evaluated value of the communication quality of the channel with the best communication quality, for example), of the eight channels (channels D1 to D8 (see Fig. 2)) to the electronic apparatuses 10 (the electronic apparatuses 10 corresponding to the nodes B to P (see Fig. 1)) other than the management apparatus 20 connected to the in-home coaxial wiring 2. Thus, the management apparatus 20 can send the information about the channel, the evaluated value of the communication quality of which falls below the prescribed second threshold, to the electronic apparatuses 10 (the electronic apparatuses 10 corresponding to the nodes D to H and L to P (see Fig. 1)) connected to the in-home coaxial wiring 2 and not joining the network 4. Consequently, use of the channel, the evaluated value of the communication quality of which falls below the prescribed second threshold, can be inhibited when a new network is established by the electronic apparatuses 10 connected to the in-home coaxial wiring 2 and not joining the network 4, and hence establishment of a network with poor communication quality on the in-home coaxial wiring 2 can be inhibited.

According to this embodiment, as hereinabove described, the management apparatus 20 is formed to send the information about the channel, the evaluated value of the communication quality of which falls below the prescribed second threshold to the electronic apparatuses 10 other than the management apparatus 20 connected to the in-home coaxial wiring 2 by including the taboo list with the information about the channel, the evaluated value of the communication quality of which falls below the prescribed second threshold (50 % of the evaluated value of the communication quality of the channel with the best communication quality, for example), in the beacon signal transmitted when synchronizing communication with the electronic apparatuses 10 (the electronic apparatuses 10 corresponding to the nodes B to P (see Fig. 1)) other than the management apparatus 20. Thus, the information about the channel, the evaluated value of the communication quality of which falls below the prescribed second threshold can be easily sent to all the electronic apparatuses 10 connected to the in-home coaxial wiring 2 with the taboo list included in the beacon signal transmitted when synchronizing communication with the electronic apparatuses 10 other than the management apparatus 20.

According to this embodiment, as hereinabove described, the management apparatus 20 is formed to determine whether or not the communication quality of the channel included in the taboo list has been recovered by evaluating the communication quality of the channel included in the taboo list periodically, and delete the channel, the communication quality of which has been recovered, from the taboo list if determining that the communication quality of the channel included in the taboo list has been recovered. Thus, the channel, the communication quality of which has been recovered, included in the taboo list is deleted from the taboo list, whereby even the channel included in the taboo list can be employed as a channel for establishing the network 4 if the communication quality thereof has been recovered, and hence all the eight channels (channels D1 to D8 (see Fig. 2)) available on the in-home coaxial wiring 2 can be employed.

According to this embodiment, as hereinabove described, the time interval (one day, for example) for evaluating the communication quality of the channel included in the taboo list periodically is set to be longer than the time interval for evaluating the communication quality of one channel employed by the six electronic apparatuses 10 (the electronic apparatuses 10 corresponding to the nodes A to C and I to K (see Fig. 1)) periodically. Thus, the frequency of evaluating the communication quality of the channel included in the taboo list can be decreased, dissimilarly to a case where the time interval for evaluating the communication quality of the channel included in the taboo list periodically is set to be shorter than the time interval for evaluating the communication quality of one channel employed by the six electronic apparatuses 10 (the electronic apparatuses 10 corresponding to the nodes A to C and I to K (see Fig. 1)) periodically. Consequently, the burden on the electronic apparatuses 10 in evaluating the communication quality of the channel included in the taboo list can be reduced.

According to this embodiment, as hereinabove described, each of the sixteen electronic apparatuses 10 (the electronic apparatuses 10 corresponding to the nodes A to P (see Fig. 1)) can function as the management apparatus 20, and another electronic apparatus 10 other than the electronic apparatus 10 selected as the management apparatus 20 is not selected as the management apparatus 20 at least during a time period when the network 4 is reestablished, when the electronic apparatus 10 (the electronic apparatus 10 corresponding to the node A in this embodiment (see Fig. 1)) with the best communication quality is selected from among the sixteen electronic apparatuses 10 as the management apparatus 20. Thus, another electronic apparatus 10 other than the electronic apparatus 10 selected as the management apparatus 20 can be precluded from selection as the management apparatus 20 at least during a time period when the network 4 is reestablished. Consequently, disturbance of reestablishment of the network 4 caused by dynamic switch of the management apparatus 20 during a time period when the network 4 is reestablished can be inhibited.

According to this embodiment, as hereinabove described, the electronic apparatus 10 selected as the management apparatus 20 is set to be preferentially selected as the management apparatus 20 while the electronic apparatuses 10 other than the electronic apparatus 10 selected as the management apparatus 20 are set not to be preferentially selected as the management apparatus 20, whereby the electronic apparatuses 10 other than the electronic apparatus 10 selected as the management apparatus 20 are not selected as the management apparatus 20 at least during a time period when the network 4 is reestablished. Thus, the electronic apparatuses 10 other than the electronic apparatus 10 selected as the management apparatus 20 before the network 4 is reestablished can be set not to be preferentially selected as the management apparatus 20, and hence the management apparatus 20 can be easily inhibited from switching dynamically during a time period when the network 4 is reestablished.

Although the present invention has been described and illustrated in detail, it is clearly understood that the same is by way of illustration and example only and is not to be taken by way of limitation, the spirit and scope of the present invention being limited only by the terms of the appended claims.

For example, while the aforementioned embodiment is applied to the network system including a plurality of the electronic apparatuses capable of establishing the network complying with the MoCA standard on the coaxial wiring, the present invention is not restricted to this. The present invention may be applied to a network system including a plurality of electronic apparatuses capable of establishing a network complying with a standard (DOCSIS (Data Over Cable service Interface Specifications) standard, for example) other than the MoCA standard on coaxial wiring.

While the aforementioned embodiment is applied to the network system in which the management apparatus evaluates the communication quality of a channel every 60 minutes, the present invention is not restricted to this. The present invention may be applied to a network system in which a management apparatus evaluates the communication quality of a channel periodically.

While the aforementioned embodiment is applied to the network system in which the communication quality is evaluated on the basis of the communication speed of the physical layer in the OSI reference model, the present invention is not restricted to this. The present invention may be applied to a network system in which the communication quality is evaluated by measuring the packet loss and the delay time in transmitting and receiving a test packet in the application layer or the like higher than the physical layer.

While a value decided on the basis of a past evaluated value of the communication quality of a channel (80 % of the evaluated value of the communication quality of the channel 60 minutes before) is employed as the first threshold in the aforementioned embodiment, the present invention is not restricted to this. In the present invention, a value not based on the past evaluated value of the communication quality of the channel may be employed as the first threshold. Alternatively, a value falling below 80 % of the evaluated value of the communication quality of the channel 60 minutes before or a value exceeding 80 % of the evaluated value of the communication quality of the channel 60 minutes before may be employed as the first threshold.

While 50 % of the evaluated value of the communication quality of the channel with the best communication quality is employed as the second threshold in the aforementioned embodiment, the present invention is not restricted to this. In the present invention, a value falling below 50 % of the evaluated value of the communication quality of the channel with the best communication quality or a value exceeding 50 % of the evaluated value of the communication quality of the channel with the best communication quality may be employed as the second threshold.

## Claims

1. A network system (1) comprising a plurality of electronic apparatuses (10, 20) having a communication function capable of establishing a network (4) selectively employing one channel of a plurality of channels available on coaxial wiring (2), wherein
said plurality of electronic apparatuses include a management apparatus (20) managing said network, wherein
said management apparatus is formed to determine whether or not communication quality of said one channel is deteriorated by evaluating said communication quality of said one channel employed by said plurality of electronic apparatuses periodically,
the network system formed to reestablish said network if said management apparatus determines that said communication quality of said one channel is deteriorated.

2. The network system according to claim 1, wherein said management apparatus is formed to evaluate communication quality of said plurality of channels available on said coaxial wiring and select a channel with the best communication quality from among said plurality of channels on the basis of evaluated values of said communication quality of said plurality of channels available on said coaxial wiring,
the network system formed to reestablish said network employing said channel with the best communication quality selected by said management apparatus.

3. The network system according to claim 1, wherein said management apparatus is formed to determine that said communication quality of said one channel is deteriorated when an evaluated value of said communication quality of said one channel falls below a prescribed first threshold,
the network system formed to reestablish said network if said management apparatus determines that said communication quality of said one channel is deteriorated.

4. The network system according to claim 3, wherein said first threshold is decided on the basis of a past evaluated value of said communication quality of said one channel.

5. The network system according to claim 1, wherein said management apparatus is formed to evaluate said communication quality of said channel after a prescribed time period has elapsed since said network was established, and a communication state is stabilized.

6. The network system according to claim 1, wherein said management apparatus is formed to evaluate said communication quality of said channel on the basis of a communication speed in said channel.

7. The network system according to claim 6, wherein said management apparatus is formed to evaluate said communication quality of said channel on the basis of a total value of a communication speed between said management apparatus and each of a plurality of electronic apparatuses other than said management apparatus in said channel.

8. The network system according to claim 6, wherein said communication speed is a communication speed of a physical layer in an OSI reference model.

9. The network system according to claim 1, wherein said management apparatus is formed to send information about a channel, an evaluated value of communication quality of which falls below a prescribed second threshold, of said plurality of channels to an electronic apparatus connected to said coaxial wiring other than said management apparatus.

10. The network system according to claim 9, wherein said management apparatus is formed to send said information about said channel, said evaluated value of said communication quality of which falls below said prescribed second threshold to said electronic apparatus connected to said coaxial wiring other than said management apparatus by including taboo information with said information about said channel, said evaluated value of said communication quality of which falls below said prescribed second threshold in a synchronization signal transmitted when synchronizing communication with said electronic apparatus other than said management apparatus.

11. The network system according to claim 10, wherein said management apparatus is formed to determine whether or not communication quality of a channel included in said taboo information has been recovered by evaluating said communication quality of said channel included in said taboo information periodically and delete said channel, said communication quality of which has been recovered, from said taboo information if determining that said communication quality of said channel included in said taboo information has been recovered.

12. The network system according to claim 11, wherein a time interval for evaluating said communication quality of said channel included in said taboo information periodically is longer than a time interval for evaluating said communication quality of said one channel employed by said plurality of electronic apparatuses periodically.

13. The network system according to claim 1, wherein each of said plurality of electronic apparatuses is formed to be capable of functioning as said management apparatus,
the network system so formed that another electronic apparatus other than an electronic apparatus selected as said management apparatus is not selected as said management apparatus at least during a time period when said network is reestablished, when an electronic apparatus with the best communication quality is selected from among said plurality of electronic apparatuses as said management apparatus.

14. The network system according to claim 13, set such that said electronic apparatus selected as said management apparatus is preferentially selected as a management apparatus and said another electronic apparatus other than said electronic apparatus selected as said management apparatus is not preferentially selected as a management apparatus, so that said another electronic apparatus other than said electronic apparatus selected as said management apparatus is not selected as said management apparatus at least during a time period when said network is reestablished.

15. The network system according to claim 1, wherein each of said plurality of electronic apparatuses has a receiving portion capable of receiving a broadcast signal through said coaxial wiring and has a communication function capable of establishing a network complying with a MoCA standard on said coaxial wiring.
